# EUROPÄISCHE PATENTANMELDUNG

(11) **EP 2 182 731 A2**
(43) Veröffentlichungstag der Anmeldung: **05.05.2010**
(21) Anmeldenummer: 09013614.4
(22) Anmeldetag: 29.10.2009
(51) Int. Cl.: H04N 7/24

(54) **Vorrichtung und Verfahren zur Teilung eines MPEG2-TS-Transportrahmens**

(30) Priorität: 29.10.2008 ES 200803120
(71) Anmelder: TELEVES, S.A., 15706 Santiago de Compostela (ES)
(72) Erfinder: Gomez Garcia, Modesto, 15706 - Santiago de Compostela (ES); Gonzalez Sal, Maria, 15706 - Santiago de Compostela (ES); Miguel Esmoris, José Ramón, 15706 - Santiago de Compostela (ES)
(74) Vertreter: Dosterschill, Peter

(57) **Zusammenfassung**

Die Erfindung betrifft eine Vorrichtung zum Umsetzen von Telekommunikationssignalen, insbesondere von über Satelliten gemäß dem DVB-S- und/oder DVB-S2-Standard übertragenen Fernsehsignalen in Fernsehsignale gemäß den Standards DVB-T, DVB-T2, DVB-C. Diese Vorrichtung besteht aus
- einer Baugruppe, die aus einem Abwärtsumsetzerblock (1) und einem DVB-S2- und/oder DVB-S-Signal-Demodulatorblock (2) aufgebaut ist, der an seinem Eingang einen Satellitensignalsatz (a) im DVB-S2- oder DVB-S-Format empfängt und an seinem Ausgang einen MPEG2-TS-Transportrahmen (f) bereitstellt, der durch einen Decrypter (4) entschlüsselbar ist, der einen ganz oder teilweise entschlüsselten MPEG2-TS-Transportrahmen (i) erzeugt,
- einem Transportrahmenteilerblock (3), der den MPEG2-TS-Transportrahmen (i) in mindestens zwei MPEG2-TS-Transportrahmen teilt, in einen ersten MPEG2-TS1-Transportrahmen (k) und in einen zweiten MPEG2-TS2-Transportrahmen (I), und
- einem Steuerblock (7) mit mindestens einer Benutzerschnittstelle (71, 72),

## Beschreibung

Die vorliegende Erfindung betrifft eine Vorrichtung und ein Verfahren zur Teilung eines MPEG2-TS-Transportrahmens in mindestens zwei MPEG2-TS-Transportrahmen.

Der Ausgangspunkt für das aktuelle Digitalfernsehen war die Gründung des Konsortiums DVB, das die Standards zur Übertragung über Satelliten (DVB-S), Kabel (DVB-C) und terrestrisch (DVB-T) festlegte, welche die Ausbreitung digitaler Fernsehdienste nicht nur auf europäischer Ebene, sondern sogar auf weltweiter Ebene ermöglichten.

Die zuvor erwähnten Übertragungsstandards wurden als Datencontainer entwickelt, in die alle Arten von Diensten aufgenommen werden können, und zwar sowohl Video als auch Audio und Multimedia-Daten. Die Übertragungsstandards wurden als transparent für den transportierten Dienstetyp (Standard-Video, Video mit hoher Auflösung, Stereo-Audio usw.) entwickelt, um ihre Weiterentwicklung hin zur Verteilung von Diensten mit hoher Auflösung zu ermöglichen, wenn die Technologie und der Markt dies erlauben.

Gleichzeitig prüften die wichtigsten europäischen Bezahlfernsehbetreiber aufmerksam die Einführung des Digitalfernsehens, das auf den Arbeiten über die Kompressionstechniken basiert, die innerhalb der Internationalen Organisation für Normung (ISO) durchgeführt wurden, um einen Standard zu vervollkommnen, der als MPEG (ISO/IEC 13818-1) bezeichnet wird. Dieser Standard bildete die Grundlage für das Digitalfernsehen, so wie es heute bekannt ist.

Der MPEG-Standard definierte die Verfahren zur Kompression von Audio- und Videosignalen (woraus sich die sogenannten PES, Packet Elementary Stream, ergaben) sowie eine Struktur zum Verschachteln und Transportieren der komprimierten Signale, der sogenannte Transportrahmen MPEG2, abgekürzt mit "MPEG2-TS".

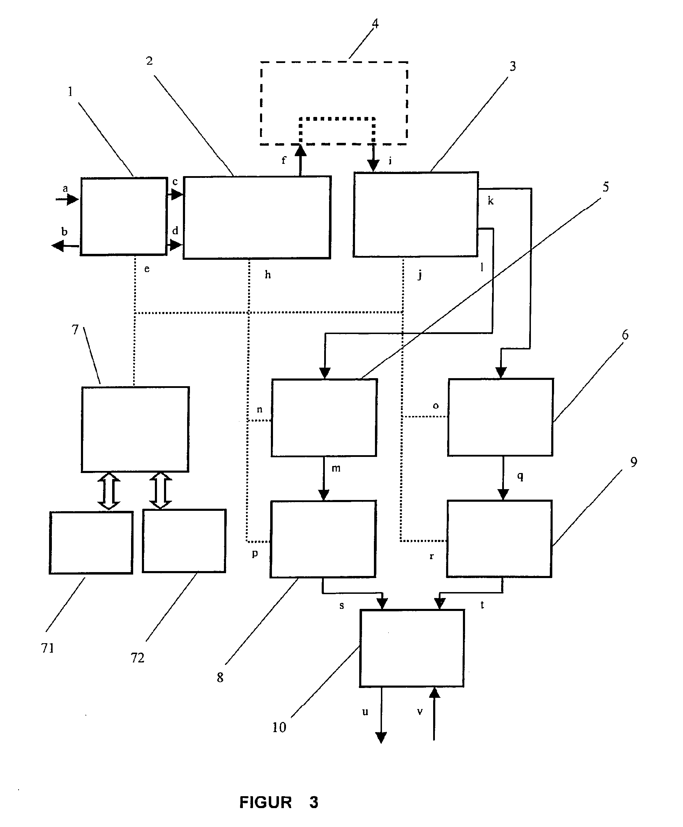

Zur Übertragung des Transportrahmens (MPEG2-TS) werden in Abhängigkeit vom Übertragungsmittel (Satellit, Kabel oder terrestrisch) die zuvor erwähnten Standards DVB-S, für Satelliten, DVB-C, für Kabel, und DVB-T, für terrestrische Übertragung, verwendet. Schließlich fügt der MPEG-Standard der MPEG2-TS-Struktur die Information (PSI oder Packet Specific Information) hinzu, die erforderlich ist, damit der Inhalt des Rahmens zugänglich ist und die Dienste, die er enthält, decodiert und von jedem Empfänger in korrekter Form dargestellt werden können. Diese Information ist in sogenannten PSI-Tabellen im MPEG2-TS-Eingangstransportrahmen (f) (Figur 3) enthalten.

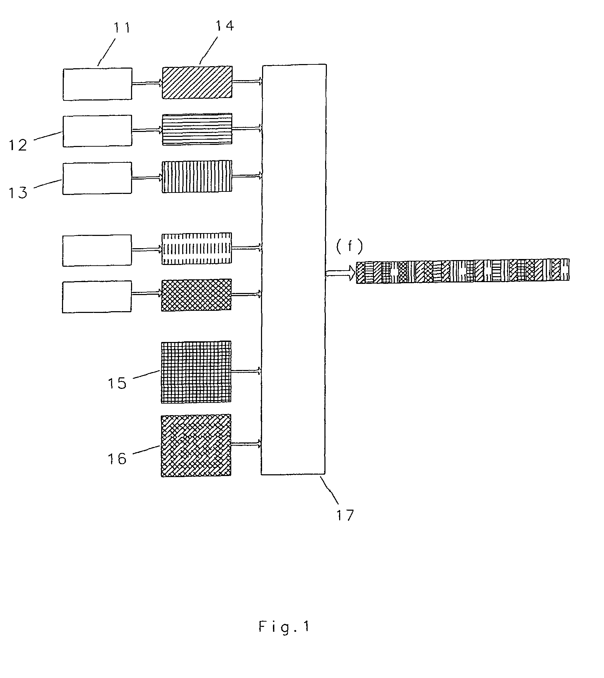

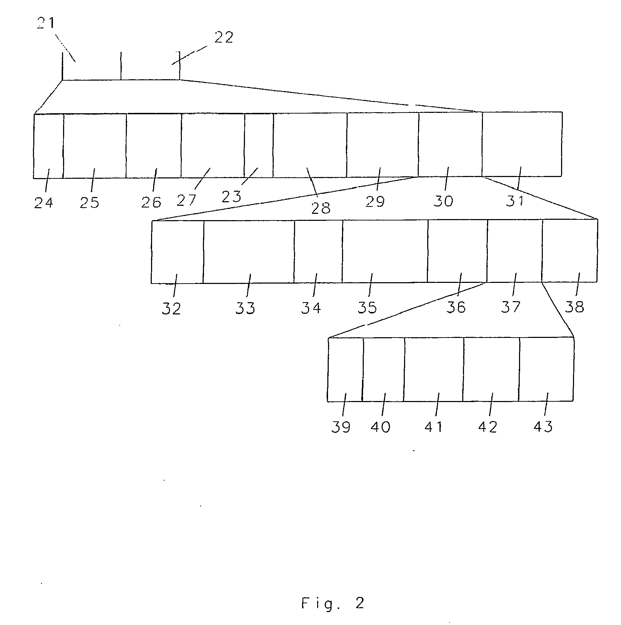

Figur 1 stellt die wichtigsten Elemente beim Aufbau eines Transportrahmens (MPEG2- TS) dar. Figur 2 stellt die Länge der Pakete des Transportrahmens (188 Bytes) sowie die Felder des Transportrahmens dar, von welchen die Paketkennung oder PID hervorzuheben ist, die beim Verfahren zur Verteilung von Diensten, das im Folgenden beschrieben wird, von Bedeutung ist.

Die Übertragungsstandards DVB-T, DVB-S, DVB-C wurden als Container von Daten im Rahmenformat MPEG2-TS mit Modulations- und Fehlerschutzeigenschaften entsprechend dem Übertragungsmedium konzipiert. Aus diesem Grund besteht ein Kompromiss zwischen Kapazität und Redundanz, weshalb im Allgemeinen der Kabelstandard DVB-C der mit der größten Kapazität ist, gefolgt vom Satellitenstandard DVB-S und schließlich vom terrestrischen Standard DVB-T.

Unter Berücksichtigung dieser Kapazitätsstaffelung verwendet ein über Satellit empfangener Transportrahmen (MPEG2-TS), der in einem Kabelnetz verteilt werden soll, das Konzept, das als transparente Transmodulation bekannt ist und das beim Übergang von einem auf das andere Medium eine Modulations- und Fehlerschutzänderung durchführt, jedoch ohne Beschränkungen in Bezug auf die Kapazität. So enthält der DVB-C-Standard in seinem Anhang B Beispiele für die transparente Verteilung von über Satelliten verteilten Signalen in Kabelnetzen.

Dies ist jedoch nicht der Fall, wenn es sich bei dem Standard, in dem die Verteilung der Satellitensignale erfolgen soll, um DVB-T handelt. In diesem Fall ist die Transmodulation im Allgemeinen nicht transparent, sondern muss an die geringere Kapazität der DVB-T-Modulation angepasst werden, so dass irgendein Dienst des vom Satelliten kommenden Transportrahmens (MPEG2-TS) eliminiert werden muss.

Allerdings wurde die Transparenz bei der Transmodulation von Satelliten auf Kabel mit der Weiterentwicklung vom DVB-S- zum DVB-S2-Standard beschränkt, der mit dem Hauptziel geschaffen wurde, die binäre Kapazität eines Satelliten-Transponders zu maximieren, und zwar bei einer mittleren Kapazitätserhöhung von 30 % je nach verwendetem Modulationsformat und Schutzcode zu maximieren.

Im Falle der DVB-S2-Verteilung in Kabelnetzen ermöglichen es die effizientesten Modulationen des aktuellen DVB-C-Standards, wie beispielsweise 256QAM, in vielen Fällen, die Satellitendienste in Kabelverteilungsnetzen mit einer Kanaleinteilung von 8 MHz unterzubringen, obwohl ihre Effizienz in anderen Fällen nicht ausreichend ist. Dies ist, unter anderem, der Grund, warum die Weiterentwicklung des Standards DVB-C (künftig DVB-C2) mit dem Ziel durchgeführt wird, die binäre Kapazität, wie bei der Weiterentwicklung des Satellitenstandards, bis zur theoretischen Grenze zu erhöhen, die durch das Shannon-Theorem definiert ist, und das Konzept der transparenten Transmodulation zu erweitern.

Aber es wird trotzdem noch einige Zeit vergehen, bis DVB-C2-Verteilungsgeräte auf dem Markt zur Verfügung stehen, so dass die Standards DVB-C und DVB-T sowohl bei Receivern als auch bei integrierten Fernsehern die am meisten verwendeten sind.
Die Aufgabe der vorliegenden Erfindung ist es, eine Vorrichtung und ein Verfahren zu schaffen, die den vom Satelliten kommenden MPEG2-TS-Transportrahmen (im DVB-S- oder DVB-S2-Format) in mindesten zwei Transportrahmen MPEG2-TS1 und MPEG2-TS2 teilen, deren Summe auf Dienstebene dem ursprünglichen MPEG2-TS-Transportrahmen entspricht.

Diese Aufgabe wird mit einer Vorrichtung und einem Verfahren gelöst, die in den Ansprüchen definiert sind.

Jeder Transportrahmen MPEG2-TS1 und MPEG2-TS2 wird demoduliert und anschließend in je ein UHF-Signal moduliert, wobei die UHF-Signale vorteilhafter weise in zwei UHF-Kanälen verteilt werden.

In einem Ausführungsbeispiel gemäß der Erfindung ist eine Vorrichtung zum Umsetzen von Telekommunikationssignalen, insbesondere von über Satelliten gemäß dem DVB-S- und/oder DVB-S2-Standard übertragenen Fernsehsignalen in Fernsehsignale gemäß dem DVB-T-, DVB-T2-, DVB-C-Standard **dadurch gekennzeichnet, dass** sie mindestens besteht aus: einer Baugruppe, die aus einem Abwärtsumsetzerblock und einem DVB-S2- und/oder DVB-S-Signal-Demodulatorblock aufgebaut ist, die an ihrem Eingang einen Satellitensignalsatz im DVB-S2- oder DVB-S-Format empfängt und die an ihrem Ausgang einen MPEG2-TS-Transportrahmen bereitstellt, der durch einen Decrypter entschlüsselt werden kann. Dieser zeugt einen ganz oder teilweise entschlüsselten MPEG2-TS-Transportrahmen (i). Weiterhin weist die Vorrichtung einen Transportrahmenteilerblock, der den MPEG2-TS-Transportrahmen (i) in mindestens zwei MPEG2-TS-Transportrahmen teilt, in einen ersten Transportrahmen MPEG2-TS1 und in einen zweiten Transportrahmen MPEG2-TS2.
In einem weiteren Ausführungsbeispiel der erfindungsgemäßen Vorrichtung weist diese auf: zwei DVB-T- und/oder DVB-C-Modulationsblöcke, welche die Modulation der MPEG2-TS-Transportrahmen in Signale durchführen, die auf eine bestimmte Zwischenrequenz moduliert werden; zwei Aufwärtsumsetzerblöcke, welche die auf Zwischenfrequenz modulierten Signale in zwei Kanäle des UHF/VHF-Bandes umsetzten, wodurch zwei RF-Ausgangssignale mit der Kanaleinteilung CCIR erhalten werden, die in einem Summierblock summiert werden, der eine Summierung der Signale durchführt und als Ergebnis ein RF-Ausgangssignal ausgibt, das dem transmodulierten Signal des MPEG2-TS-Eingangstransportrahmens entspricht.

In einem weiteren Ausführungsbeispiel gemäß der Erfindung ist die Vorrichtung zum Umsetzen von Telekommunikationssignalen **dadurch gekennzeichnet, dass** die Summe auf Dienstebene des ersten Transportrahmens MPEG2-TS1 und des zweiten Transportrahmens MPEG-2TS2 am Ausgang des Transportrahmenteilerblocks genau dem MPEG2-TS-Transportrahmen am Eingang des Transportrahmenteilerblocks entspricht.

In einem anderen Ausführungsbeispiel gemäß der Erfindung ist das Verfahren zur Umsetzung von Telekommunikationssignalen, insbesondere Fernsehsignalen, über Satelliten gemäß dem DVB-S und/oder DVB-S2-Standard in Fernsehsignale gemäß dem DVB-T und/oder DVB-C-Standard **dadurch gekennzeichnet, dass** es die Teilung des MPEG2-TS-Eingangstransportrahmens in mindestens zwei Rahmen: einen ersten Transportrahmen MPEG2-TS1 und einen zweiten Transportrahmen MPEG2-TS2, anhand der folgenden Schritte durchführt:
Analysieren des Eingangstransportrahmens (f) durch Lesen der in diesem Rahmen (f) enthaltenen PSI-Tabellen und Messen der statistischen Belegung jedes Dienstes;
Informieren des Benutzers über Schnittstellen über den Zustand der Anpassungsrate in Abhängigkeit von der DVB-T und/oder DVB-C-Modulation, die im Modulatorblock (5) angewendet wird, und der Rate des Eingangstransportrahmens (f),
Auswählen durch den Benutzer oder auf automatische Weise der zu eliminierenden Dienste über die Benutzerschnittstellen 71 und/oder 72;
Modifizieren der PSI-Tabellen im ersten Transportrahmen MPEG2-TS1 und im zweiten Transportrahmen MPEG2-TS2 in Abhängigkeit von den ausgewählten Diensten, Anpassen von Zeitstempeln und Füllen beider Rahmen mit Nullpaketen.

Im Folgenden wird eine bevorzugte Ausführungsform des Systems gemäß der Erfindung auf der Basis der Figuren beispielhaft beschrieben:
Es zeigt:
- Figur 1: ein Beispiel eines MPEG2-TS-Transportrahmens;
- Figur 2: ein Paketbeispiel des MPEG2-Transportrahmens;.
- Figur 3: ein Blockdiagramm einer Vorrichtung gemäß der Erfindung; und
- Figur 4: den Prozess der Decodierung von Diensten des MPEG2-Transportrahmens.

Figur 1 stellt die wichtigsten Elemente beim Aufbau des MPEG2-TS-Transportrahmens dar: die Audio-Decodierer (11), die Video-Decodierer (12), die Daten-Codierer (13), die Packer (14), die PSI-Informationspakete (15), welche die programmspezifische Information enthalten, die Taktinformation (16). Die gesamte Information wird in den Multiplexer (17) eingeführt, wobei am Ausgang der MPEG2-Transportrahmen (MPEG2-TS-Transportstrom) (f) erhalten wird, der die verschiedenen Signaltypen (Video, Audio, Daten, Information usw.) komprimiert und verschachtelt transportiert, wie in Figur 1 zu sehen.

Figur 2 stellt ein Beispiel von Paketen des MPEG-TS2-Transportrahmens (f) mit einer Länge von 188 Bytes dar. Dieses Paket besteht aus einem Kopf (21) von 4 Bytes und einer Nutzlast (22) von 184 Bytes. Im Kopf befindet sich die Paketkennung (PID) (23), die zur Identifikation der Inhalte der Nutzlast des Pakets dient. Weitere Elemente (24 bis 42) des Transportrahmens (f) sind in der Bezugszeichentabelle aufgelistet.

Wie in Figur 3 zu sehen ist, besteht die Vorrichtung gemäß der Erfindung aus einem Abwärtsumsetzerblock (1), einem DVB-S- und/oder DVB-S2-Signal-Demodulatorblock (2), einem Transportrahmenteilerblock (3), einem Steuerblock (7), insbesondere mit einer Benutzerschnittstelle (71) und/oder einer entfernten Benutzerschnittstelle (72), sowie gegebenenfalls einem Zugangsbeschränkungsblock (Entschlüsselungsblock) (4).
Die Vorrichtung kann weiterhin zwei DVB-T- und/oder DVB-C-Modulatorblöcke (5, 6), zwei Aufwärtsumsetzerblöcken (8) und (9) sowie einen Summierblock (10) aufweisen.
Der Abwärtsumsetzerblock (1) empfängt an seinem Eingang den Satellitensignalsatz (a) im DVB-S2- oder DVB-S-Format, die vom Satelliteneingangsanschluss kommen, und wählt das Signal aus, das demoduliert wird. Dazu führt er eine Umsetzung auf Zwischenfrequenz FI durch und erhält durch die Schwebung eines Empfangsoszillator die gleichphasigen I (c) und um 90° phasen-verschobenen Q (d) Signale, die an den Demodulatorblock (2) übergeben werden. Das Ausgangssignal (b) ermöglicht es auch, die Eingangssatellitensignale (a) zu einem benachbarten Modul mit derselben Funktionalität oder einer anderen Funktionalität zu leiten.
Der Abwärtsumsetzerblock (1) wird durch den Steuerblock (7) über die geeigneten Steuersignale (e) gesteuert.
Der Demodulatorblock (2) empfängt die gleichphasigen I und um 90° phasenverschobenen Q Signale (c, d), die vom Abwärtsumsetzerblock (1) kommen, und führt die digitale Demodulation im engen Sinne durch: Erhalt des MPEG2-Transportrahmens unter QEF (Quasi Error Free)-Bedingungen, das heißt, mit einer Bitfehlerrate von unter 1 x 10-12 oder einem nicht korrigierten Bit in einem Intervall von einer Stunde. Das Ausgangssignal des Demodulatorblocks (2) besteht aus dem DVB-S- oder DVB-S2-demodulierten MPEG2-TS-Eingangstransportrahmen (f). Der Satellitendemodulator (2) wird durch den Steuerblock (7) über die entsprechenden Steuersignale (h) während des Koppel- und Überwachungsprozesses (sowohl in DVB-S als auch in DVB-S2) kontinuierlich gesteuert, um die Synchronisierung von Träger, Takt und Daten durchzuführen.
Der Zugangsbeschränkungsblock (4) weist als Eingang den MPEG2-TS-Eingangstransportrahmen (f) auf und führt unter Verwendung von externen Medien (CAM- und/oder SMART CARD-Modulen) und durch Lesen der Zugangsbeschränkungstabelle im Transportrahmen (f) (CAT, Conditional Access Table) die Entschlüsselung eines oder mehrerer Dienste des angepassten Rahmens (f) durch, wobei er sie an seinem Ausgang (i) als entschlüsselt darstellt. Falls diese Funktionalität nicht benötigt wird, wird der Eingangstransportrahmen (f) unverändert (f=i) in den Transportrahmenteilerblock (3) eingekoppelt.
Der Transportrahmenteilerblock (3) stellt den Mittelpunk t der Erfindung dar, und in ihm läuft das in der vorliegenden Erfindung vorgeschlagene Verteilungsverfahren ab. Er funktioniert folgendermaßen:
Aus dem MPEG2-TS-Transportrahmen (f) wird die Information der verfügbaren Programme durch den Erhalt der PAT-Tabelle (PID=0) extrahiert. Danach wird die Information der PMT-Tabellen der verschiedenen Programme extrahiert, durch die alle PID in Erfahrung gebracht werden, die im demodulierten MPG2-TS-Satellitentransportrahmen (f) vorhanden sind. Schließlich werden alle Transportpakete, die zu den PID gehören, die in der PMT-Tabelle identifiziert wurden, während eines Zeitintervalls, das 32.767 Pakten entspricht, analysiert. Diese Analyse ermöglicht es, den prozentuellen Rahmenanteil zu erfahren, den jeder einzelne der im Rahmen vorhandenen Dienste belegt.
Diese Information ermöglicht es, den prozentuellen Rahmenanteil jeden Dienstes zu erfahren, um auf diese Weise die Teilung des MPEG-2-TS-Transportrahmens (f) in zwei Transportrahmen MPEG2-TS (k) und (1) am Ausgang des Transportrahmenteilerblocks (3) vorzunehmen.

Das Verfahren besteht aus den folgenden Schritten:
- **Überwachung des decodierten Rahmens**
Der Rahmenanpassungsblock (3) führt eine Voruntersuchung der Eigenschaften des demodulierten Transportrahmens bei seinem Eingang (i) durch, um über ein kohärentes Kriterium zur Durchführung der Anpassung der Bitrate zu verfügen. Diese Überwachung versieht den Benutzer mit zwei Informationstypen über den Satellitenrahmen (i):
Information über verfügbare Dienste: Durch Lesen der ursprünglichen PSI-Tabellen verfügt der Benutzer über alle Dienste, die den Eingangsrahmen bilden.
Information über die statistische Belegung jedes verfügbaren Dienstes: Die Gesamtheit der konstanten Rate des Transports wird durch die Summe aller verfügbaren Dienste mit veränderlicher Rate bestimmt. Dieser Block führt eine statistische Messung des Anteils durch, den jeder Dienst in Bezug auf die verfügbare Gesamtrate belegt. Da die Dienste mit veränderlicher Rate (VBR) codiert sind, werden diese statistischen Messungen in konstanten Zeiträumen veränderlicher Dauer in Abhängigkeit von der Eingangsbitrate durchgeführt. Dieser Zeitraum von 32.767 Paketen ist jedenfalls klein genug, um veränderliche Ratenspitzen zu erkennen und keine zeitlich übermäßig ausgedehnte Integration durchzuführen.

### Überwachung des Zustands der Ratenanpassung

In Abhängigkeit von dem in (6, 7) verwendeten DVB-T- oder DVB-C-Format und -Modulationsmodus und der Eingangsrate (i) gibt der Block dem Benutzer statistische Information über den Zustand der Teilung.
Es ist zu berücksichtigen, dass sich der Prozess zur Eliminierung eines Dienstes in einem der Ausgangsrahmen (k, l) nur in einer Eliminierung von Nutzrate ausdrückt, wenn dieser Dienst keine Informationspakete (Audio, Video usw.) mit einem anderen Dienst teilt. Daher handelt es sich bei der an den Benutzer gelieferten statistischen Information über einen Dienst um den prozentuellen Belegungsanteil von "reduzierbarer" Rate, falls dieser Dienst eliminiert wird (Rate, die in Paketen enthalten ist, die nicht mit anderen Diensten geteilt werden). Auf diese Weise wird stets sichergestellt, dass der prozentuelle Belegungsanteil, der dem Benutzer angezeigt wird, eliminiert wird, falls der entsprechende Dienst eliminiert wird, wobei die Nutzeliminierung größer sein kann, falls auch seine duplizierten Dienste eliminiert werden.

### Auswahl von zu eliminierenden Diensten

Im manuellen Modus wählt der Benutzer über die entsprechenden Schnittstellen (8, 9) die Dienste, die er aus dem demodulierten Transportpaket (f) zu eliminieren wünscht, unter Berücksichtigung der statistischen Information über die Anpassung, die Belegung jedes Dienstes sowie das Format und den Modulationsmodus beim Ausgang manuell aus. Sobald die neue Dienstekonfiguraton durchgeführt ist, konfiguriert sich der Anpassungsblock (3) neu (j) und berechnet die neue Statistikinformation.

In der bevorzugten Ausführungsform der Erfindung bilden die aus dem demodulierten MPEG2-TS-Transportrahmen (f) eliminierten Dienste den MPEG2-TS-Transportrahmen (k), während die restlichen Dienste den MPEG2-TS-Transportrahmen (l) bilden.
Im automatischen Modus führt die Vorrichtung die Teilung des demodulierten MPEG2-TS-Transportrahmens (f) in die beiden Transportrahmen MPEG2-TS1 (k) und MPEG2-TS2 (l) in Abhängigkeit von der gemäß dem Ausgangsformat und -modulationsmodus (DVB-T, DVB-C) verfügbaren Bitrate automatisch durch.

### Modifikation der PSI-Tabellen der Ausgangsrahmen

Schließlich werden für die (im manuellen oder automatischen Modus) definierten Dienstekonfigurationen die folgenden PSI-Diensteinformationstabellen in den Transportrahmen MPEG2-TS1(k) und MPEG2-TS2(l) modifiziert, die in DVB-T oder DVB-C verteilt werden.
PAT (Program Association Table): Die Tabellen werden unter Berücksichtigung der Dienste, die in die aktuellen Transportrahmen aufgenommen werden, wiederhergestellt.
SDT (Service Description Table): Die Deskriptoren "service descriptor" werden durch Ersetzen der Zeichen der eliminierten Dienste durch "N.A" (nicht verfügbar) modifiziert. Ebenso wird in jedem zu eliminierenden Dienst das Feld "running" in den Zustand "not running" umgewandelt.
RST (Running Status Table): In jedem der eliminierten Dienste wird das Feld "running" in den Zustand "not running" umgeändert.
NIT (Network Information Table): Beim Umändern des Satellitensendestandards (DVB-S2/DVB-S) in terrestrisch (DVB-T /DVB-C) werden folgende Änderungen durchgeführt:
Ersetzen der Satelliten-"network_id" durch "National Network Terrestrial Broadcast".
Ersetzen des "Satellite delivery system desriptor" durch den "terrestrial delivery system descriptor" oder "cable_delivery_system_descriptor) mit den Übertragungsparametern gemäß der DVB-T/DVB-C-Frequenz und den DVB-T/DVB-C-Modulationsparametern, die in (6, 7) verwendet werden.

### Ratenfüllung mit Nullpaketen

Sobald die Eliminierung der Dienste und die Rahmenanpassung durchgeführt sind, werden die aus der Teilung resultierenden Transportrahmen statistisch mit Nullpaketen (PID = 0x1FFE) gefüllt, um die Bitraten gemäß den gewählten DVB-T- oder DVB-C-Modulationsparametern zu erreichen.

### Anpassung von Zeitstempeln

Da die ursprüngliche Transportrate manipuliert wird, ist es schließlich notwendig, eine Anpassung der Zeitstempel (PCRs, Program Clock Reference) gemäß der resultierenden Ausgangsrate bei (k, l) durchzuführen.

### Überwachung des Zustands der Ratenanpassung

Neben der erwähnten statistischen Information informiert der Rahmenanpassungsblock (3) den Benutzer jederzeit über die folgenden Parameter, die mit der Anpassung des Transportrahmens in Verbindung stehen:
Änderungen des Inhalts des demodulierten Rahmens (f). Wenn sich der Diensteinhalt ändert, wird der Benutzer (j) darüber informiert, dass er das Gerät wieder neu konfigurieren muss, um die Rate gemäß der neuen Information zu berechnen, die im Satellitentransportrahmen (i) verfügbar ist.
Vorhandensein von Spitzen in der Eingangsbitrate (f), die, auch wenn sie keine Ratenüberschreitung verursachen (die Spitzen werden durch einen analysesysteminternen Speicher absorbiert), ist es wahrscheinlich, dass im Dauerbetriebsbereich eine oder beide Ausgangsbitraten (k, l) die durch die Blöcke (6, 7) erlaubte überschreiten, da der interne Speicher keine Ratenspitzen mehr absorbieren kann. Auch dieser Zeitpunkt der Ratenüberschreitung wird dem Benutzer angezeigt.

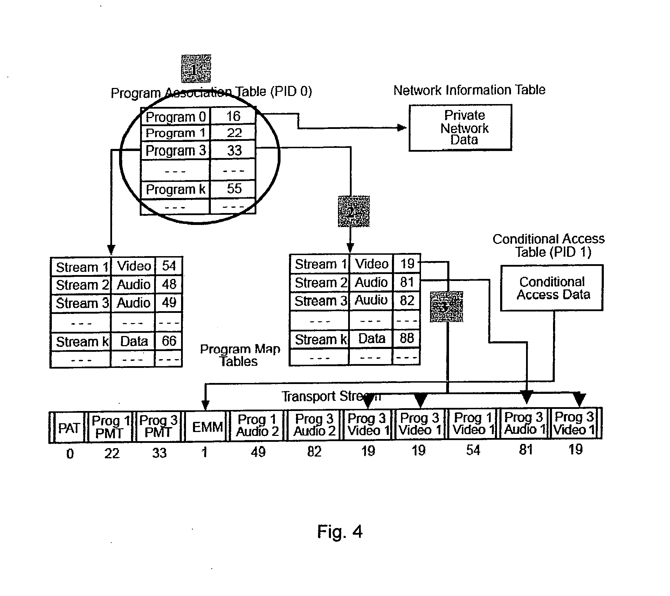

Figur 4 veranschaulicht den Prozess der Decodierung von Diensten ab der Diensteinformationsanalyse (PSI/SI) des MPEG2-Transportrahmens. Zunächst (Schritt 1) erfolgt die Decodierung der PAT-Tabelle (PID =0), die es ermöglicht, die Programme zu erfahren, die das Transportpaket bilden. Vom ausgewählten Programm (Programm 3 in der Figur 3) wird die PMT-Tabelle (PID =33) ausgewählt, die es ermöglicht, die PIDs der Rahmen zu erfahren, die die Dienste bilden, die zum ausgewählten Programm gehören (Schritt 2). Schließlich werden die Audio- und Video-Dienste aus dem Transportpaket ausgewählt (und decodiert) (Schritt 3).

Der Steuerblock (7) der Vorrichtung, die Gegenstand der Erfindung ist, führt alle Funktionen aus, die notwendig sind, um zwei Transportrahmen (k, l) bei der Rate zu erhalten, die eine transparente Transmodulation im DVB-T- oder DVB-C-Standard ab dem demodulierten Signal bei seinem Eingang (i) zu erhalten. In der bevorzugten Ausführungsform werden die Ausgangsbitraten der beiden Ausgangsrahmen gemäß einem Verfahren, das im Anschluss detailliert wird, automatisch bestimmt. Dies kann vom Benutzer auch manuell durchgeführt werden, indem er die verschiedenen Dienste des ursprünglichen Transportpakets in den einen oder anderen der Ausgangstransportrahmen (k, l) leitet.
Im automatischen Modus sind die Modulatorblöcke (5) und (6) in Abhängigkeit von den DVB-T- oder DVB-C-Modulationsparametern, konkret vom DVB-T-Modus, der im Steuerblock (7) unter den gemäß der Norm ETSI EN 300 744 möglichen ausgewählt wird, und der unter allen möglichen (16QAM, 32QAM, 64QAM, 128QAM, 256QAM) ausgewählten DVB-C-Konstellation. In der bevorzugten Ausführungsform der vorliegenden Erfindung wird die Kombination von Parametern verwendet, um die maximale Kapazität zu erreichen, die der DVB-T-Standard bereitstellen kann, und im Falle des Verwendens von DVB-C ist das bevorzugte Modulationsformat 64QAM.

Aufgrund der Notwendigkeit des Festlegens eines Kriteriums für die Eingangsrateneliminierung, um den vom Satelliten kommenden Transportrahmen (f) in zwei ähnliche Rahmen (k, l) zu teilen, liefert dieser Block über eine Schnittstelle (71, 72) mit dem Steuerblock (7) Information über die Eigenschaften des Eingangsrahmens (i) an den Benutzer. Auf diese Weise erfährt der Benutzer die Beiträge zum Satellitentransportrahmen (f) der verschiedenen Programme, die eliminiert werden, sowie den Zustand der Bitratenanpassung.

Mit all diesen Informationen (Belegung jedes Dienstes im MPEG2-TS-Eingangstransportrahmen (f), Bitraten, die am Ausgang in Abhängigkeit von den gewählten Modulationsparametern verfügbar sind) führt die Vorrichtung die Partition der Dienste durch und informiert den Benutzer über dieselbe.

Die DVB-T/DVB-C-Modulatorblöcke (5) und (6) führen gemäß den Normen ETSI EN 300 744 oder EN300429 eine Modulation der MPEG2-TS-Transportrahmen (l) beziehungsweise (k) durch, in welche der MPEG2-TS-Transportrahmen (f) (oder (i), falls er entschlüsselt wurde ) geteilt wurde. Der DVB-T- oder DVB-C-Modus wird durch den Steuerblock (7) über die entsprechenden Steuersignale (n, o) ausgewählt. Der auf Zwischenfrequenz (m) und (q) modulierte Ausgang s, t dieser Blöcke wird zu den Aufwärtsumsetzerblöcken (8) und (9) zur anschließenden Frequenzumsetzung auf einen Kanal im VHF/UHF-Band geführt.
Schließlich führt das Summierblock (10) die Summierung der Radiofrequenzsignale durch, die von den Aufwärtsumsetzerblöcke (8, 9) kommen, und gibt als Ergebnis die beiden resultierenden RF-Ausgangskanäle u aus. Mit einem Signal v, das dem Summierblock 10 ausgangsseitig zugeführt wird, kann das Ausgangssignal u mit Ausgangssignalen anderer Vorrichtungen derselben oder einer anderen Funktionalität kombiniert bzw. verknüpft werden.

Das Steuermodul 7 führt die Verwaltung des Betriebs aller erwähnten Blöcke des Systems durch:
DVB-S2- oder DVB-S-Demodulationsparameter (Frequenz, Symbolgeschwindigkeit)
Steuerung der Anpassungsrate des Verarbeitungsblocks
Ausgangsmodus des DVB-T-Blocks
Ausgangsmodus des DVB-C-Blocks
Ausgangsfrequenz des Aufwärtsumsetzers
Die allgemeine Steuerung des Systems wird durch den Benutzer über eine Schnittstelle lokal (71) oder entfernt (72) verwaltet.

### Liste der Bezugszeichen:

- 1.-: Abwärtsumsetzerblock
- 2.-: DVB-S- und/oder DVB-S2-Signal-Demodulatorblock
- 3.-: Transportrahmenteilerblock
- 4.-: Zugangsbeschränkungsblock, Entschlüsselungsblock, Decrypter
- 5.-: DVB-T- und/oder DVB-T2-Modulatorblock
- 6.-: DVB-T- und/oder DVB-T2-Modulatorblock
- 7.-: Steuerblock
- 8.-: Aufwärtsumsetzerblock
- 9.-: Aufwärtsumsetzerblock
- 10.-: Summierblock
- 71.-: Lokale Benutzerschnittstelle
- 72.-: Entfernte Benutzerschnittstelle
- 11.-: Audio-Codierer
- 12.-: Video-Codierer
- 13.-: Daten-Codierer
- 14.-: Packer
- 15.-: Pakete mit (PSI)-spezifischer Information
- 16.-: Taktinformation.
- 17.-: Multiplexer
- 21.-: Kopf Paket MPEG2-Transportrahmen
- 22.-: Nutzlast Paket MPEG2-Transportrahmen
- 23.-: Paketkennung PID
- 24.-: Synchronitätsbyte
- 25.-: Transportfehlerindikator
- 26.-: Anfangsindikator
- 27.-: Transportpriorität
- 28.-: Verschlüsselungssteuerung
- 29.-: Anpassungsfeldsteuerung
- 30.-: Fortlaufzähler
- 31.-: Anpassungsfeld
- 32.-: Länge des Anpassungsfeldes
- 33.-: Unterbrechungsindikator
- 34.-: Direktzugangsindikator
- 35.-: Elementarstrom-Prioritätsindikator
- 36.-: Fünf Indikatoren
- 37.-: Optionale Felder
- 38.-: Füllbytes
- 39.-: Programmtaktreferenz
- 40.-: Ursprüngliche Programmtaktreferenz
- 41.-: Anschlussrückwärtszählung
- 42.-: Private Transportdaten
- 43,-: Anpassungsfeld
- a: Satellitensignalsatz im DVB- S2- oder DBV-2-Format
- b: Signalausgang
- c: Gleichphasiges Signal (l)
- d: Um 90° phasenverschobenes Signal (Q)
- e: Steuersignal
- f: MPEG2-TS-Eingangstransportrahmen (DVB-S- oder DBV-S2-Demodulation) (f = i, für den Fall keiner Entschlüsselung (4))
- h: Steuersignale
- i: Entschlüsselter MPEG2-TS-Transportrahmen (f). Entspricht dem MPEG2-TS-Transportrahmen (f), falls der Zugangsbeschränkungsblock 4 nicht vorhanden bzw. nicht aktiviert ist
- j: Steuersignal
- k: Einer der MPEG-TS-Transportrahmen, in die der MPEG2-TS-Transportrahmen (f) geteilt wird
- l: Einer der MPEG-TS-Transportrahmen, in die der MPEG2-TS-Transportrahmen (f) geteilt wird
- m: Ausgangssignal, das auf Zwischenfrequenzsignal bei 36 MHz moduliert ist
- q: Ausgangssignal, das auf Zwischenfrequenzsignal bei 36 MHz moduliert ist
- n: Steuersignal
- o: Steuersignal
- s: Radiofrequenz-Ausgangssignal gemäß DVB-T- oder DVB-T2-Standard, das dem MPEG-TS-Transportrahmen (l) entspricht
- t: Radiofrequenz-Ausgangssignal gemäß DVB-T- oder DVB-T2-Standard, das dem MPEG-TS-Transportrahmen (k) entspricht
- u: Radiofrequenz-Ausgangssignal gemäß DVB-T- oder DVB-T2-Standard, das die Summe der Signale (s) und (t) ist und dem MPEG2-TS-Transportrahmen (f) entspricht

## Patentansprüche

1. Vorrichtung zum Umsetzen von Telekommunikationssignalen, insbesondere von über Satelliten gemäß dem DVB-S- und/oder DVB-S2-Standard übertragenen Fernsehsignalen in Fernsehsignale gemäß den Standards DVB-T, DVB-T2, DVB-C,
**dadurch gekennzeichnet,**
**dass** sie mindestens besteht aus:
- einer Baugruppe, die aus einem Abwärtsumsetzerblock (1) und einem DVB-S2- und/oder DVB-S-Signal-Demodulatorblock (2) aufgebaut ist, die an ihrem Eingang einen Satellitensignalsatz (a) im DVB-S2- oder DVB-S-Format empfängt und die an ihrem Ausgang einen MPEG2-TS-Eingangstransportrahmen (f) bereitstellt, der durch einen Decrypter (4) entschlüsselbar ist, der einen ganz oder teilweise entschlüsselten MPEG2-TS-Transportrahmen (i) erzeugt,
- einem Transportrahmenteilerblock (3), der den MPEG2-TS-Transportrahmen (i) in mindestens zwei MPEG2-TS-Transportrahmen teilt, in einen ersten MPEG2-TS1-Transportrahmen (k) und in einen zweiten MPEG2-TS2-Transportrahmen (l), und
- einem Steuerblock (7) mit mindestens einer Benutzerschnittstelle (71, 72).

2. Vorrichtung nach Anspruch 1, **dadurch gekennzeichnet, dass** sie weiterhin besteht aus:
- zwei DVB-T- und/oder DVB-T2-Modulatorblöcken (5, 6), die eine Modulation des ersten Transportrahmens MPEG2-TS1 (k) und/oder des zweiten Transportrahmens MPEG2-TS2 (l) in Signale (m, q) durchführen, die auf eine vorgebbare Zwischenfrequenz moduliert werden,
- zwei Aufwärtsumsetzerblöcken (8, 9), welche die auf Zwischenfrequenz modulierten Signale (m, q) in zwei Kanäle des UHF/VHF-Bandes umsetzen, wodurch zwei RF-Ausgangssignale (s, t) gebildet werden, und
- einem Summierblock (10), der die Summierung der RF-Ausgangssignale (s, t) durchführt und als Ergebnis ein Signal (n) ausgibt, das dem transmodulierten Signal des MPEG2-TS-Eingangtransportrahmens (f) entspricht.

3. Vorrichtung nach einem der vorstehenden Ansprüche, **dadurch gekennzeichnet, dass** die Summe des ersten MPEG2-TS1-Transportrahmens (k) und des zweiten MPEG2-TS2-Transportrahmens (l) am Ausgang des Transportrahmenteilerblocks (3) genau dem MPEG2-TS-Transportrahmen (i) am Eingang des Transportrahmenteilerblocks (3) entspricht.

4. Verfahren zur Umsetzung von Telekommunikationssignalen, insbesondere von über Satelliten gemäß dem DVB-S- und/oder DVB-S2-Standard übertragenen Fernsehsignalen in Fernsehsignale gemäß dem DVB-T- und/oder DVB-T2-Standard, mittels einer Vorrichtung nach einem der vorstehenden Ansprüche,
**dadurch gekennzeichnet,**
**dass** es eine Teilung des MPEG2-TS-Eingangstransportrahmens (f) in mindestens zwei MPEG2-TS-Transportrahmen, in einen ersten MPEG2-TS-Transportrahmen (k) und in einen zweiten MPEG2-TS-Transportrahmen (l), in folgenden Schritten durchführt:
- Analysieren des MPEG2-TS-Eingangstransportrahmen (f) durch Lesen von im MPEG2-TS-Eingangstransportrahmen (f) enthaltenen PSI-Tabellen, und Messen der statistischen Belegung jedes Dienstes;
- Informieren eines Benutzers über mindestens eine Benutzerschnittstelle (71, 72) über den Zustand der Ratenanpassung in Abhängigkeit von der DVB-T-Modulation, die Modulatorblock (5) angewendet wird, und der Rate des MPEG2-TS-Eingangstransportrahmens (f, i);
- Auswählen durch den Benutzer der zu eliminierenden Dienste über die mindestens eine Benutzerschnittstelle (71, 72); und
- Modifizieren der PSI-Tabellen des MPEG2-TS Eingangstransportrahmens (f, i) in Abhängigkeit von ausgewählten Diensten, Anpassen von Zeitstempeln und/oder Füllen mit Nullpaketen.
